# EUROPEAN PATENT APPLICATION

(11) **EP 3 187 855 A1**
(43) Date of publication of application: **05.07.2017**
(21) Application number: 15836483.6
(22) Date of filing: 15.06.2015
(51) Int. Cl.: G01N 21/15, G01N 35/02

(54) **REACTION CELL FOR AUTOMATIC ANALYSIS DEVICE, AUTOMATIC ANALYSIS DEVICE EQUIPPED WITH SAID REACTION CELL, AND ANALYSIS METHOD USING SAID AUTOMATIC ANALYSIS DEVICE**

(30) Priority: 29.08.2014 JP 2014175019
(71) Applicant: Hitachi High-Technologies Corporation, Tokyo 105-8717 (JP)
(72) Inventor: KOBAYASHI, Masayuki, Tokyo 100-8280 (JP); TANIGUCHI, Shinichi, Tokyo 100-8280 (JP); YAMAZAKI, Isao, Tokyo 105-8717 (JP)
(74) Representative: Strehl Schübel-Hopf & Partner
(86) International application number: PCT/JP2015/067171
(87) International publication number: WO 2016/031353

(57) **Abstract**

An automatic analysis device provided with: a sample disk mechanism; a reaction disk for accommodating the reaction cells; reagent disk mechanisms; a sample-supplying dispensation mechanism which supplies samples to the reaction cells; a reagent-supplying dispensation mechanism which supplies prescribed amounts of reagents to the reaction cells; a detection unit which irradiates, with light, the reaction cells having, formed therein, mixed solutions of the samples and the reagents, and detects the light transmitted through the reaction cells to detect the optical characteristics of the mixed solutions; a pollution prevention film formation mechanism which supplies a pollution preventing solution to the reaction cells to form pollution prevention films on the inner wall surfaces of the reaction cells; and a pollution prevention film removal mechanism which supplies a removal solution to the reaction cells to remove the pollution prevention films from the inner wall surfaces of the reaction cells.

## Description

### Technical Field

The present invention relates to a reaction cell for an automatic analysis device, an automatic analysis device equipped with the reaction cell, and an analysis method using the automatic analysis device.

### Background Art

In clinical inspection for medical diagnosis, a biochemical analysis and an immunological analysis are made of protein, sugar, lipids, enzymes, hormones, inorganic ions, disease markers, etc. in biological samples such as blood and urine. Since processing a plurality of analysis items at high reliability and at high speed is required in clinical inspection, most of the processing is performed by an automatic analysis device. Heretofore, as an automatic analysis device, a biochemical analysis device is known which takes in, as an object for analysis, a reaction solution in which a reaction is induced by getting a desired reagent mixed in with a sample such as, e.g., serum and performs a biological analysis by measuring the absorbance of the solution.

An automatic analysis device configuration is described in, e.g., Japanese Patent No. 4584878 (Patent Literature (PTL) 1). This publication states that "a biological analysis device is configured including, inter alia, a reaction cell into which a sample and a reagent are injected, a mechanism which automatically injects a sample and a reagent into the reaction cell, an automatic stirring mechanism which mixes the sample and the reagent in the reaction cell, a mechanism which performs spectral measurement of the sample that is being reacted or has been reacted, and an automatic cleaning mechanism which absorbs and discharges the reaction solution after the spectral measurement finishes and cleans the reaction cell". A common material that is used as the material of reaction cells is glass or synthetic resin, as described in Japanese Patent Application Laid-Open No. 2005-30763 (PTL 2).

By the way, as a problem in repeated use of a reaction cell for a long period, Japanese Patent Application Laid-Open No. 2011-21953 (PTL 3) states that "when a reaction container (synonymous with a reaction cell) continues to be used over a long period, a protein, lipid, or the like included in an analyte specimen and a residue such as latex included in a reagent will accumulate, thereby the inside of the reaction container is polluted, and air bubbles would tend to adhere to polluted portions".

An event of adsorption of a biologically relevant substance such as protein onto the surface of a synthetic resin is commonly known. For example, in Japanese Patent Application Laid-Open No. 2003-226893 (PTL 4), there is a description that hydrophobic interaction causes protein to adsorb onto the surface of a hydrophobic synthetic resin such as polyethylene, polypropylene, polystyrene, polyvinyl chloride, polycarbonate, etc.

In Japanese Patent Application Laid-Open No. 2009-21657 (PTL 5), disclosed is a method for preventing pollution (non-specific adsorption) of a biologically relevant substance onto the surface of a synthetic resin. In this publication, there is a description that "a coating agent for preventing non-specific adsorption of a biologically relevant substance, which pertains to the present embodiment, enables it to prevent the non-specific adsorption of protein or the like by allowing a water-soluble copolymer (P) to adsorb onto the wall surface of a container, receptacle, or the like by hydrophobic bonding with a repeating unit (B) and making the wall surface hydrophilic by a repeating unit (A) (and, additionally, a repeating unit (C), if the water-soluble copolymer (P) includes a repeating unit (C))". That is, the coating agent for preventing non-specific adsorption is made to adsorb onto the composing material (of the container or receptacle) that is desired to be prevented from pollution by hydrophobic bonding.

As a problem in using a hydrophobic synthetic resin as the material of reaction cells, in PTL 1 mentioned above, there is a description that "it has been noticed that the influence of air bubbles becomes more apparent in experiments to aim at making the capacity of a reaction cell smaller than ever before. A cause of this problem is the hydrophobic nature of a transparent resin that is used as the material of reaction cells." In regard to this problem, PTL 1 states that "it was confirmed that making the inner wall surfaces of a reaction cell hydrophilic prevents the adhesion of air bubbles".

### Citation List

### Patent Literature

PTL 1: Japanese Patent No. 4584878
PTL 2: Japanese Patent Application Laid-Open No. 2005-30763
PTL 3: Japanese Patent Application Laid-Open No. 2011-21953
PTL 4: Japanese Patent Application Laid-Open No. 2003-226893
PTL 5: Japanese Patent Application Laid-Open No. 2009-216572

### Summary of Invention

### Technical Problem

For automatic analysis devices, it is more strongly demanded to reduce reagent and sample quantities and it becomes more important to reduce reaction cell pollution and inhibit air bubble adhesion. To meet needs of users who want to analyze more diversified items of analysis, a wide variety of reagents is put into use. Accordingly, substances with potential to cause reaction cell pollution become diverse.

The use of glass (hydrophilic) or a hydrophilic synthetic resin as the material of reaction cells is effective for inhibiting air bubble adhesion, but this poses a problem in which a specimen liquid ascends up to the rim of a reaction cell by capillary action and mixes with a reagent in an adjoining reaction cell and mutual contamination is liable to occur.

In regard to a container made of a hydrophobic resin as its composing material, as a technical approach to prevent pollution by a biologically relevant substance, PTL 5 describes a coating agent for preventing non-specific adsorption; the coating agent is adsorbed on the surface of the hydrophobic resin through hydrophobic bonding. However, a method for removing the coating agent for preventing non-specific adsorption which has once adsorbed on the surface of the composing material is not disclosed.

By the way, in an automatic analysis device, a sample or an inspection target is mixed with a desired reagent and reacted. If a coating agent exists in a reaction cell, the coating agent would act on reaction of the sample with the reagent for some item of analysis (some kind of reagent) and there is a possibility of decreasing the reliability of analysis. As a countermeasure to this, before analyzing an analysis item that is prone to this problem, it is conceivable to remove a coating layer from the surface of a reaction cell and eject it from inside the reaction cell. When doing so, it is required that the coating layer adsorbed on the surface of the reaction cell can easily be removed with an aquatic detergent which can be used for an automatic analysis device.

In view of the foregoing, a problem to be solved by the present invention is as follows: inhibiting air bubble adhesion to reaction cells and making reaction cell pollution prevention with a coating agent applicable only for a specific analysis item.

### Solution to Problem

To address the foregoing problem, an automatic analysis device according to the present invention is configured including a sample disk mechanism accommodating a plurality of sample cells, each holding a sample as an inspection target; a reaction disk accommodating a plurality of reaction cells; a reagent disk mechanism accommodating reagent containers, each holding a reagent; a sample supplying dispensation mechanism equipped with a sample nozzle that suctions a sample held in a sample cell in the sample disk mechanism and supplies a prescribed quantity of the sample to a reaction cell in the reaction disk; a reagent supplying dispensation mechanism equipped with a reagent dispensing nozzle that suctions a reagent held in a reagent container in the reagent disk mechanism and supplies a prescribed quantity of the reagent to a reaction cell in the reaction disk; a detector that irradiates, with light, a reaction cell in which a mixed solution of a sample supplied by the sample supplying dispensation mechanism and a reagent supplied by the reagent supplying dispensation mechanism has been created, detects light transmitted through the reaction cell, and detects an optical characteristic of the mixed solution; a pollution prevention film forming mechanism that supplies a reaction cell in the reaction disk with a pollution prevention solution for preventing inner wall surfaces of the reaction cell supplied with a sample and a reagent from being polluted with the sample or the reagent or a mixed solution of the sample and the reagent, forms a pollution prevention film on the inner wall surfaces of the reaction cell, and, subsequently, discharges the pollution prevention solution from the reaction cell; a pollution prevention film removing mechanism that supplies the reaction cell in which the pollution prevention film has been formed in the reaction disk with a removal solution for removing the pollution prevention film from the inner wall surfaces of the reaction cell and discharges, from the reaction cell, the removal solution by which the pollution prevention film has been removed from the inner wall surfaces of the reaction cell; a computer that exerts overall control; and an operating panel to input information relevant to analysis to the computer.

Moreover, to address the foregoing problem, an analysis method using an automatic analysis device according to the present invention includes suctioning a sample held in a sample cell accommodated in a sample disk mechanism by a sample nozzle of a sample supplying dispensation mechanism; supplying a sample suctioned by the sample nozzle to a reaction cell accommodated in a reaction disk; suctioning a reagent held in a reagent container in a reagent disk mechanism by a reagent dispensing nozzle of a reagent supplying dispensation mechanism; supplying a reagent suctioned by the reagent dispensing nozzle to a reaction cell in the reaction disk; and irradiating, with light, the reaction cell in which a mixed solution of the sample supplied and the reagent supplied has been created and analyzing the sample based on a signal obtained by detecting light transmitted through the reaction cell. The analysis method further includes the following: before supplying a sample suctioned by the sample nozzle to a reaction cell accommodated in the reaction disk, supplying the reaction cell with a pollution prevention solution and forming a pollution prevention film on inner wall surfaces of the reaction cell; discharging the mixed solution from the reaction cell after having analyzed the sample; and supplying a removal solution to the reaction cell from which the mixed solution has been discharged and removing the pollution prevention film formed on the inner wall surfaces of the reaction cell.

Furthermore, to address the foregoing problem, a reaction cell into which a sample and a reagent are injected to create a mixed solution for use in an automatic analysis device, according to the present invention, includes a pair of opposing wall surfaces transmitting light as lateral wall surfaces, and a hydrophilic surface is formed, at least in a region contacting with a mixed solution, to make the inner surfaces of the pair of walls transmitting light.

### Advantageous Effects of Invention

According to one aspect of the present invention, it is enabled to inhibit air bubble adhesion to reaction cells and to make reaction cell pollution prevention with a coating agent applicable only for a specific analysis item. Thereby, it is possible to alleviate burdens of maintenance that a user should perform. Decreasing the reliability of analysis because of pollution can be also avoided. Moreover, by applying pollution prevention only for a specific analysis item, it is possible to prevent that the reliability of analysis decreases because of an adverse effect of a coating agent for other items. , Contributions can be also made to reducing reagent quantity and decreasing the running cost of an automatic analysis device.

Problems, configurations, and advantageous effects other than described above will be apparent from the following description of embodiments.

### Brief Description of Drawings

Fig. 1 is a perspective view of a cross section of a reaction cell, which depicts a conventional reaction cell structure.
Fig. 2 is a perspective view of a cross section of a reaction cell, which depicts a conventional reaction cell structure.
Fig. 3 is a perspective view of a cross section of a reaction cell, which depicts a reaction cell pertaining to the present invention.
Fig. 4 is a partial cross-sectional view of a reaction cell pertaining to the present invention.
Fig. 5 is a cross-sectional view of a sensor chip prepared for evaluating a pollution prevention effect pertaining to the present invention with a surface plasmon resonance measurement device.
Fig. 6A is a perspective view depicting a schematic configuration of an automatic analysis device pertaining to Example 1 of the present invention.
Fig. 6B is a front view depicting a schematic structure of a coating agent injection nozzle of a pollution prevention film forming mechanism in the automatic analysis device pertaining to Example 1 of the present invention.
Fig. 7 is a flowchart illustrating an operation flow of the automatic analysis device pertaining to Example 1 of the present invention.
Fig. 8 is a block diagram depicting a schematic structure of a detector to detect an optical characteristic of a solution in a reaction cell in the automatic analysis device pertaining to Example 1 of the present invention.
Fig. 9 is a flowchart illustrating an operation flow in which cell skipping is performed by the automatic analysis device pertaining to Example 1 of the present invention.
Fig. 10 is a perspective view depicting a schematic configuration of an automatic analysis device pertaining to Example 2 of the present invention.

### Description of Embodiments

In the following, the present invention will be described in detail. And now, the present invention is not limited to its embodiment examples which will be described in the following context. Before describing an Example of an automatic analysis device according to the present invention, a reaction cell for use in the present invention is described below.

### <Structure of a reaction cell>

In an automatic analysis device, a large number of reaction cells are arranged in the automatic analysis device through the use of, e.g., a cell block including a plurality of reaction cells, as described in PTL 1 mentioned previously. In the following context, descriptions are provided about a single reaction cell to explain plainly.

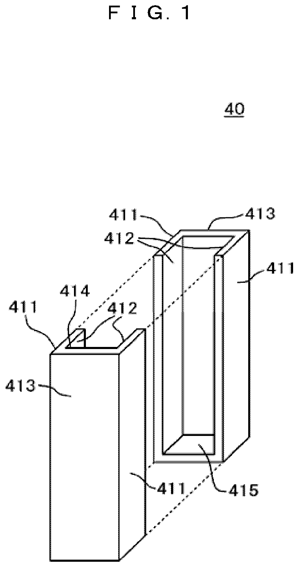

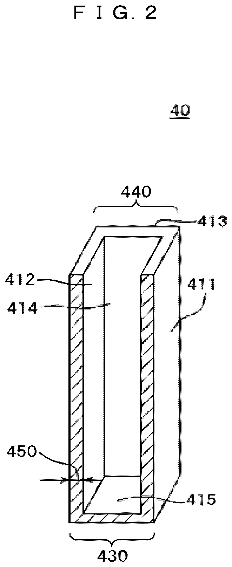

One example of a perspective external view of a conventional reaction cell 40 is depicted in Fig. 1. The conventional reaction cell 40 is composed of a non-photometric side outer wall 411, a non-photometric side inner wall 412, a photometric side outer wall 413, a photometric side inner wall 414, and a bottom face 415. Moreover, as depicted in Fig. 2, the reaction cell 40 is surrounded in its periphery by walls 450 having a thickness 450 and has a closed bottom 430 at the bottom and an opening 440 at the top

As the material of a reaction cell 4 pertaining to an automatic analysis device according to the present invention, a synthetic resin that is known publicly can be used. In particular, the synthetic resin may be of one kind which is selected from the following: polycycloolefin, polycarbonate resin, acrylic resin, and polystyrene resin. In light of a low water absorption ratio, low moisture permeability, high total light transmittance, low refraction index, and a low molding shrinkage ratio, it is preferable to select polycycloolefin.

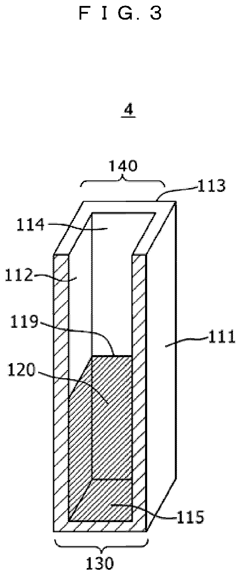

A perspective external view of a reaction cell 4 pertaining to an automatic analysis device according to the present invention is depicted in Fig. 3. The reaction cell is locally processed by a hydrophilic treatment in a part 120 of a photometric side inner wall 114 from the bottom face 115 to a boundary line 119. For a local hydrophilic treatment method, a publicly known method can be applied; for example, a corona discharge treatment which is disclosed in PTL 1 mentioned previously is available. By making an upper region from the boundary line 119 to the opening 140 hydrophobicity, it is possible to prevent the reagent and sample liquid in the cell from ascending to the opening 140. In consequence, with the automatic analysis device loaded with a large number of adjoining reaction cells 4, cross-contamination of specimen between reaction cells 4 is prevented and reliability of data can be increased.

A hydrophilic treatment region 120 is further coated with a pollution prevention film and it is possible to prevent pollution of surface of the inner wall surfaces 114 and 112 of the reaction cell 4. As the pollution prevention film, a publicly known water-soluble resin can be used. Such resin may be, e.g., polyethylene glycol, polyvinyl pyrrolidone, etc. Further, a publicly know blocking agent may be used for the purpose of preventing pollution by protein included in serum or the like. For example, inter alia, bovine serum albumin can be used.

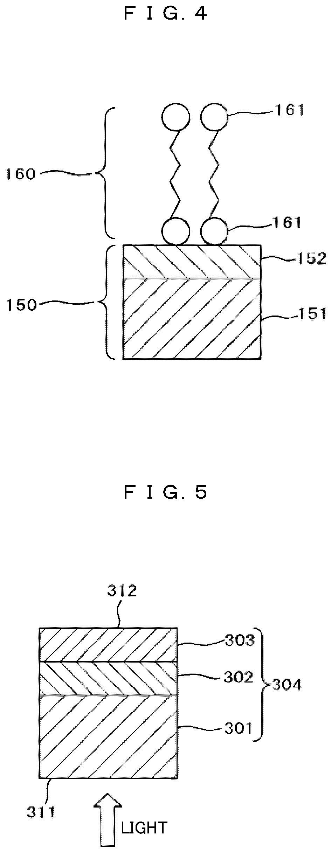

A cross-sectional view of a hydrophilic treatment region 120 with a pollution prevention film formed is depicted in Fig. 4. The composing material 150 of the reaction cell 4 is composed of polycycloolefin 151 and a hydrophilic treated layer 152. The pollution prevention film 160 has a hydrophilic portion 161. The pollution prevention film 160 is absorbed onto the surface of the hydrophilic treated layer 152 through hydrogen bonding. Since hydrogen bonding is weakened by ions or an alkali, it is possible to remove the adsorbed pollution prevention film 160 from the hydrophilic treated layer 152 with ease by an aquatic detergent such as an alkaline detergent.

### <Treatment-1, Coating the material with a pollution prevention film made of a water-soluble resin>

As the composing material of the reaction cell 4 desired to be coated, polycycloolefin was used. And now, a flat plate material with a thickness of 1 mm, simulating the cell's wall surface, was used in the present Example; however, the treatment can be performed for a cell form described previously. Descriptions are provided below with regard to (1) Hydrophilic treatment, (2) Forming a pollution prevention film, and (3) Removal method.

### (1) Hydrophilic treatment

A polycycloolefin flat plate whose surface is hydrophobic was irradiated with excimer light (with a wavelength of 172 nm) to make the surface hydrophilic. By this hydrophilic treatment, a contact angle of water with the surface of the polycycloolefin flat plate decreased from 95 degrees to 75 degrees (details will be described later). Although excimer light was used in this example to treat the flat plate material, a publicly known method enabling a partial hydrophilic treatment can be carried out for an actual cell form. For example, a hydrophilic method by a corona discharge treatment which is disclosed in PTL 1 mentioned previously is available. In both treatments of the excimer light irradiation and the corona discharge treatment, a hydrophilic functional group is introduced into the surface of a hydrophobic synthetic resin.

### (2) Forming a pollution prevention film

The polycycloolefin flat plate was immersed in an alkaline detergent for one minute and then rinsed with water. The polycycloolefin flat plate was thus cleaned. As a coating agent, polyethylene glycol (hereinafter PEG) having an average molecular weight of 5,000 was used. The polycycloolefin flat plate was immersed in an aqueous solution of PEG with a concentration of 1 wt % for 10 seconds and then rinsed with water.

### (3) Removing the pollution prevention film

The flat plate with the pollution prevention film formed thereon was immersed in a removal solution and removability of the pollution prevention film was evaluated. Evaluation was made in two removal methods using ions or an alkali as below:.

### (3-1) Treatment with a normal saline solution (ions)

The plate was immersed in a normal saline solution (an aqueous solution of sodium chloride with a concentration of 0.9w/v %) for 10 minutes and then rinsed with water.

### (3-2) Treatment with an alkaline detergent (alkali)

The plate was immersed in an alkaline detergent for one minute and then rinsed with water.

### (4) Contact angle measurement

Change in surface wettability resulting from hydrophilic treatment, forming a pollution prevention film, and removing the pollution prevention film described above was analyzed in terms of a contact angle of water. Pure water of 0.5 µl was dipped on the surface and an average contact angle for three points in a plane was obtained by a θ/2 method. Measurement was performed using the same flat plate and with respect to the surface after the completion of each process of hydrophilic treatment, forming a pollution prevention film, and removing the pollution prevention film described above.

Table 1 lists results of measurement of a contact angle of water. It was verified that, by applying the hydrophilic treatment to untreated polycycloolefin, the contact angle decreased from 95 degrees to 75 degrees and the surface was turned hydrophilic. Furthermore, the cleaning process decreased the contact angle from 75 degrees to 55 degrees.

After coating treatment was applied to the surface, the contact angle increased from 55 degrees and 69 degrees. This is because the polycycloolefin surface turned hydrophilic was coated with PEG.

After forming a pollution prevention film as described above, and treatment with a normal saline solution was performed, no change in the contact angle was found. This means that the pollution prevention film was not removed with a normal saline solution.

By the way, since ions are naturally included in serum and urine which may become a sample for the automatic analysis device, the result of contact angle measurement after the treatment with a normal saline solution indicates that the pollution prevention film is expected not to be removed even by injecting such sample into a reaction cell after forming the pollution prevention film.

When the treatment with an alkaline detergent was performed, the contact angle decreased from 69 degrees to 55 degrees which is substantially equivalent to the contact angle before the coating process (before the cleaning process). This is thought to be due to the fact that the PEG coating formed on the polycycloolefin surface turned hydrophilic was removed by the treatment with an alkaline detergent.

**[Table 1]**

| Process | Contact angle (degrees) |
|---|---|
| Untreated polycycloolefin | 95 |
| Hydrophilic treatment | 75 |
| Cleaning | 55 |
| PEG coating | 69 |
| Treatment with a normal saline solution | 69 |
| Treatment with an alkaline detergent | 55 |

From the above results, it was proved that a pollution prevention film can be formed on the polycycloolefin flat plate treated to be hydrophilic and the pollution prevention film can be removed from it by using a removal solution. Although a method of forming a pollution prevention film on a flat plate of polyolefin and removing the pollution prevention film from it was described above, this method can also be applied to a reaction cell form of polycycloolefin. For hydrophilic treatment applicable to a reaction cell form, a corona discharge treatment which is disclosed in PTL 1 mentioned previously can be applied. By application of the above-described method of forming a pollution prevention film and removing the pollution prevention film to a reaction cell treated to be hydrophilic, it becomes possible to form and remove a pollution prevention film on/from a reaction cell form of polycycloolefin.

And now, although the method of coating polycycloolefin which is a hydrophobic material with a pollution prevention film was set forth in the above-described example, such coating may be applied to glass whose surface is hydrophilic. When doing so, hydrophilic treatment described above as (1) may be dispensed with.

### <Treatment-2, Coating the material with a pollution prevention film made of a water-soluble resin>

The coating agent used in (2) in the above-described example was changed to polyvinyl pyrrolidone (hereinafter PVP) having an average molecular weight of 630,000; other processes were performed in the same way as in (1) to (3) in the above-described example. Table 2 lists results of measurement of a contact angle of water. As is the case with PEG, even when PVP was used, it was verified that a pollution prevention film can be formed on polycycloolefin turned hydrophilic (the contact angle decreased after the coating process), the pollution prevention film is not removed by the treatment with a normal saline solution (the contact angle remains unchanged after the treatment with a normal saline solution), and the pollution prevention film can be removed by the treatment with an alkaline detergent (after the treatment with an alkaline detergent, the contact angle returns to that measured before the coating process)

**[Table 2]**

| Process | Contact angle (degrees) |
|---|---|
| Untreated polycycloolefin | 95 |
| Hydrophilic treatment | 75 |
| Cleaning | 55 |
| PVP coating | 33 |
| Treatment with a normal saline solution | 36 |
| Treatment with an alkaline detergent | 53 |

To make a closer examination of the surface after forming a pollution prevention film and after removing it, surface analysis was performed using an X-ray photoelectron spectrometer (hereinafter XPS). Since PVP has nitrogen in molecular structure, comparison was made in terms of an abundance ratio of nitrogen present on the surface after each process was performed. And now, here, a tracking experiment was performed using a single polycycloolefin flat plate.

Table 3 lists results of the XPS analysis. First, no nitrogen was detected on the surface after the cleaning process. On the surface after the PVP coating process, 2.3% nitrogen was detected and it was noticed that PVP obviously adsorbs onto the polycycloolefin plate treated to be hydrophilic. Moreover, on the surface after the treatment with a normal saline solution, the abundance ratio of nitrogen is equivalent to that detected on the surface after the PVP coating process and it was verified that PVP is not removed by the treatment with a normal saline solution. Moreover, on the surface after the treatment with an alkaline detergent, no nitrogen is detected and it was verified that PWP was moved.

**[Table 3]**

| Process | Abundance ratio (atomic %) | | |
|---|---|---|---|
| | Nitrogen | Carbon | Oxygen |
| Cleaning | Not detected | 95.4 | 4.2 |
| PVP coating | 2.3 | 92.2 | 5.5 |
| Treatment with a normal saline solution | 2.4 | 92.5 | 5.1 |
| Treatment with an alkaline detergent | Not detected | 96.1 | 3.4 |

### <Evaluation of the pollution prevention effect of PEG coating>

To evaluate the pollution prevention effect of a specimen (sensor tip) with its surface treated to prevent pollution, a surface plasmon resonance (SPR) measurement device was used. The SPR measurement device is a device that optically measures a refraction index change in liquid near the surface of the sensor chip. Upon adsorption of an organic substance such as protein onto the surface of the sensor chip, the refraction index near the surface changes. Correlation between refraction index change and mass change is known and it is possible to know the mass of the adsorbed substance from an amount of refraction index change.

The pollution prevention effect was evaluated in the following procedure.

### (21) Forming a synthetic resin film on the sensor chip surface

The sensor chip surface with the outermost layer of gold was irradiated with the above-mentioned excimer light for one minute and cleaned. The cleaned sensor chip surface was coated by spin coating with a solution of polycycloolefin dissolved in an organic solvent. Thus, the sensor chip 304 having a polycycloolefin layer 303 formed thereon as the most surficial layer was obtained.

A schematic cross-sectional view of the sensor chip 304 obtained in the above-described procedure is depicted in Fig. 5. The sensor chip 304 is composed of a glass substrate 301, a gold film 302, and the polycycloolefin layer 303.

In the SPR measurement, when irradiating light is incident on the face 311 of the glass substrate 301 on the reverse side of the sensor chip 304, a refraction index change is measured by utilizing an evanescent wave exuding from the surface of the gold film 302 on the side opposite to the face 311. A range within which the evanescent wave exudes is several nanometers from the surface of the gold film 302 and the thickness of the polycycloolefin layer 303 must be thinner than that range. The thickness of the polycycloolefin layer 303 obtained in the above-described way was about 30 nm, as measured by a step gauge.

### (22) Hydrophilic treatment

The sensor chip 304 with the polycycloolefin layer 303 formed on its surface was irradiated with excimer light (a wavelength of 172 nm) and the polycycloolefin surface was turned hydrophilic.

### (23) Forming a pollution prevention film 1 <Cleaning process>

The sensor chip 304 obtained as described above was mounted on the SPR measurement device. And now, the flow rate of liquid feeding to the sensor chip 304 was always set at 20 µl per minute on the SPR device. First, water was fed to the surface of the sensor chip 304 until a detection signal (hereinafter referred to as a SPR signal) of the SPR measurement device had been stabilized. After the SPR signal had been stabilized, an alkaline detergent was fed for five minutes by 100 µl in total to clean the surface of the polycycloolefin layer 303 of the sensor chip 304. Then, water was fed again.

### (24) Forming a pollution prevention film 2 <Coating process>

After the process of cleaning the surface of the polycycloolefin layer 303 had been completed and the SPR signal stabilized, PEG with a concentration of 1wt%, as a coating agent, was fed for five minutes by 100 µl in total to the surface of the polycycloolefin layer 303 of the sensor chip 304. Then, water was fed again.

### (25) Measuring an amount of adsorption of a model pollution

After forming the pollution prevention film, a phosphate buffer solution (PBS) was fed. After the SPR signal had been stabilized, a model pollution (details of which will be described later) was fed for five minutes by 100 µl in total. After feeding the model pollution, the phosphate buffer solution was fed again. Then, after feeding the alkaline detergent for five minutes by 100 µl in total, the phosphate buffer solution was fed again. An amount of adsorption of the pollution onto the sensor chip surface was determined from a difference between the SPR signal upon the elapse of five minutes after the start of feeding the phosphate buffer solution and the SPR signal immediately before feeding the model pollution.

### (26) Model pollution

As the model pollution, a phosphate buffer solution in which bovine serum albumin (hereinafter BSA), which simulates a protein pollution, was dissolved at a concentration of 40 mg/ml was used. Moreover, to simulate a latex reagent pollution, a polystyrene latex 2.5% w/v suspension was used in which polystyrene latex has a particle size of 0.1 µm and its surface is modified with an amino group (hereinafter amino latex). A sensor chip for use in the evaluation was replaced, each time another type of coating agent or model pollution was used.

### <Evaluation of the pollution prevention effect of PVP coating>

The coating agent mentioned in (24) Forming a pollution prevention film 2 in the above-described evaluation of the pollution prevention effect of PEG coating was changed to PVP; other processes were performed in the same way as in (21) to (26) in the evaluation of the pollution prevention effect of PEG coating and an amount of adsorption of the pollution onto the sensor chip surface was determined.

### [Comparison example 1]

To evaluate the pollution prevention effects of PEG and PVP coating, the sensor chip 304 was used, but the process described above, (23) Forming a pollution prevention film 2 <Coating process>, was not performed in the comparison example; other processes were performed in the same way as in (21) to (26) in the evaluation of the pollution prevention effect of PEG coating.

Table 4 lists results of evaluation of the pollution prevention effect of PEG coating, the pollution prevention effect of PVP coating, and the pollution prevention effect in the comparison example 1

When BSA was used as a model pollution, the pollution prevention effects of PEG and PVP coating were indicated as follows: the adsorption amount was less than 0.01 ng/mm² (less than a lower limit of detection by the SPR measurement device) in each case.
In contrast, in the comparison example 1, the adsorption amount was 0.13 ng/mm².

Moreover, when amino latex was used as a model pollution, the pollution prevention effect of PEG coating was indicated as follows: the adsorption amount was less than 0.01 ng/mm². In contrast, as regards the pollution prevention effect of PVP coating and the comparison example 1, the adsorption amount was 0.53 ng/mm² and 0.48 ng/mm², respectively.

From the above results, it was verified that the pollution prevention effect of PEG coating is effective for BSA and an amino latex reagent. It was also verified that the pollution prevention effect of PVP coating is effective for BSA.

**[Table 4]**

| | Adsorption amount (unit: ng/mm²) | |
|---|---|---|
| | BSA | Amino latex |
| Pollution prevention of PEB coating | Less than 0.01 | Less than 0.01 |
| Pollution prevention of PVP coating | Less than 0.01 | 0.53 |
| Comparison example 1 | 0.13 | 0.48 |

And now, although descriptions were provided, taking polycycloolefin as an example, in the above-described example of evaluation, pollution prevention according to the present invention can be applied to synthetic resins such as polyethylene, polypropylene, polystyrene, polyvinyl chloride, and polycarbonate, as noted previously.

As described hereinbefore, the inner wall surfaces of the photometric sides of a reaction cell are characterized in that the surfaces are hydrophilic in the region that is irradiated with light from the light source of the automatic analysis device and these hydrophilic surfaces were coated with a water-soluble resin. Since the water-soluble resin adsorbs onto the hydrophilic surfaces through hydrogen bonding, it can be removed easily by an aquatic detergent such as an alkaline detergent.

The following illustrates Examples of an automatic analysis device loaded with reaction cells for which pollution preventive countermeasures described above were taken.

### Example 1

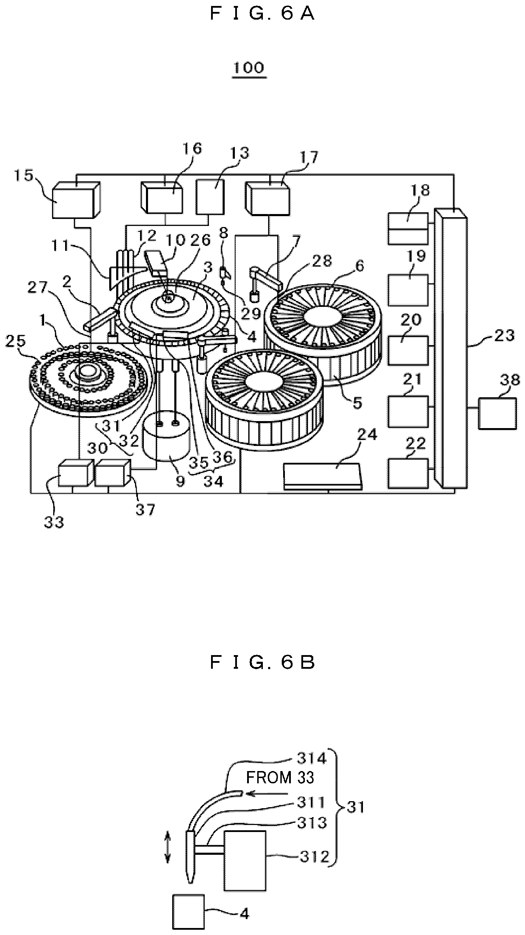

An example of configuration of an automatic analysis device 100 pertaining to Example 1 is depicted in Fig. 6A.

The automatic analysis device 100 depicted in Fig. 6A is generally configured including a sample disk mechanism 1, a sample supplying dispensation mechanism 2 equipped with a sample nozzle 27, a reaction disk 3, a reagent disk mechanism 5, a reagent pipetting mechanism 7 equipped with a reagent nozzle 28, and a computer 19 which exerts overall control via an interface 23.

A large number of sample cells 25 are arranged in the sample disk mechanism 1. Here, descriptions are provided, taking an example of the sample disk mechanism which is a sample accommodating mechanism mounted on a disk-shaped mechanism; however, other forms of the sample accommodating mechanism may be those like a sample rack or sample holder which is generally used in an analysis device. Besides, a sample which is mentioned herein refers to a specimen liquid that is used for reaction in a reaction cell 4 in the reaction disk 3 and the sample may be a collected specimen liquid as is, such as serum and urine, or a solution obtained by processing that liquid, such as diluting and preprocessing.

A sample put in a sample cell 25 is extracted by the sample nozzle 27 and injected into a specified reaction cell 4 in the reaction disk 3.

The reagent disk mechanism 5 is equipped with a large number of reagent containers 6. Moreover, a reagent supplying dispensation mechanism 7 is placed in the reagent disk mechanism 5. A reagent is suctioned by the reagent nozzle 28 of the reagent supplying dispensation mechanism 7 and injected into a specified reaction cell 4 in the reaction disk 3.

The automatic analysis device 100 depicted in Fig. 6 is equipped with dual ones, the reagent disk mechanism 5 and its ancillary mechanism.

The automatic analysis device 100 is equipped with a spectral photometer 10 and a light source 26 and the reaction disk 3 accommodating objects for measurement is placed between the spectral photometer 10 and the light source 26. Along the outer circumference of the reaction disk 3, for example, 120 reaction cells 4 whose inner walls were turned hydrophilic are installed. Moreover, the whole reaction disk 3 is maintained at a predetermined temperature by a thermostat bath 9. A sample and a reagent supplied to a reaction cell 4 are stirred by a stirring mechanism 8.

The automatic analysis device 100 is also equipped with a pollution prevention film forming mechanism 30 and a pollution prevention film removing mechanism 34. The pollution prevention film forming mechanism 30 includes a coating agent injection nozzle 31 and a coating agent suction nozzle 32 and the pollution prevention film removing mechanism 34 includes a removal solution injection nozzle 35 and a removal solution suction nozzle 36.

Reference numeral 11 denotes a reaction cell cleaning mechanism which supplies a detergent supplied from a detergent supply unit 13 to the reaction cells 4 arranged along the outer circumference of the reaction disk 3 and cleans the inside of the reaction cells 4. The detergent remaining in the reaction cells 4 after being cleaned is suctioned by the suction nozzle 12 and discharged from the reaction cells 4.

To the interface 23, the following are connected: a computer 19, a Log converter and A/D converter 18, a reagent pipetter 17, a cleaning water pump 16, a sample pipetter 15, a printer 20, a CRT 21, a floppy (a registered trademark) disk and a hard disk as a storage device 22, an operating panel 24, and a computer 19. All parts of the analysis device 100 are controlled by the computer via the interface 23.

In the foregoing configuration, an operator inputs analysis request information using the operating panel 24. The analysis request information input by the operator is stored within the computer 19. In the memory of a microcomputer 38, analysis items are stored which may or may not require coating. Based on the analysis items information stored and the analysis request information input from the operating panel 24, the microcomputer 38 causes the pollution prevention film forming mechanism 30 and the pollution prevention film removing mechanism 34 to carry out a required process. Thus, it is possible to make reaction cell pollution prevention with a coating agent applicable only for a specific analysis item.

The structure of the coating agent injection nozzle 31 of the pollution prevention film forming mechanism 30 is depicted in Fig. 6B. The coating agent injection nozzle 31 is comprised including a nozzle head 311, a nozzle vertical motion driver 312, a nozzle supporting arm 313, and a coating agent supply pipe 314.

The computer 19 controls the pollution prevention film forming mechanism 30 to cause the nozzle vertical motion driver 312 to move down the nozzle head 311 supported by the nozzle supporting arm 313, when a specified reaction cell 4 has come to the position of the coating agent injection nozzle 31. In this state, a coating agent supplied from a coating agent supply and withdrawal unit 33 through the coating agent supply pipe 314 is injected into the reaction cell. And now, a plurality types of coating agents may be stored inside the coating agent supply and withdrawal unit 33 and the type of a coating agent that is supplied to the reaction cell 4 may be changed according to an analysis item.

After a prescribed quantity of the coating agent has been supplied into the reaction cell, supply of the coating agent from the coating agent supply and withdrawal unit 33 is stopped and the nozzle head 311 is moved up by the nozzle vertical motion driver 312. Upon the elapse of a given period of time and after an pollution prevention film has been formed inside the reaction cell 4, the coating agent inside the reaction cell 4 is suctioned out by the coating agent suction nozzle 32. And now, the vertical motion of the nozzle head 311 may be synchronized with another mechanism such as the reaction container cleaning mechanism 11; in that case, the vertical motion driver can be common for a plurality of mechanisms.

Furthermore, the computer 19 controls the pollution prevention film removing mechanism 34 to do injecting a removal solution supplied from a removal solution supply and withdrawal unit 37 into the reaction cell 4 by the removal solution injection nozzle 35 and, after removal of the pollution prevention film, suctioning out the removal solution inside the reaction cell 4 by the removal solution suction nozzle 36. And now, a plurality of types of removal solutions may be stored in the removal solution supply and withdrawal unit 37 and the type of a removal solution that is supplied to the reaction cell 4 may be changed according to the type of an pollution prevention film formed inside the reaction cell 4. The structures of the coating agent suction nozzle 32, the removal solution injection nozzle 35, and the removal solution suction nozzle 36 are fundamentally the same as the structure of the coating agent injection nozzle 31 depicted in Fig. 6B and, therefore, their detailed structure depiction is omitted.

In the foregoing configuration, a measurement object specimen which was put in a sample cell 25 and set in a predetermined position in the sample accommodating mechanism 1 is dispensed in a prescribed quantity into a reaction cell by the sample pipetter 15 and the sample nozzle 27 of the sample supplying dispensation mechanism 2, according to analysis request information stored in the computer 19. The sample nozzle 27 that dispensed a prescribed quantity of a sample into the reaction cell 4 is cleaned and used to dispense a next sample.

In the foregoing configuration, the operator inputs analysis request information using the operating panel 24. The analysis request information input by the operator is stored into a memory inside the computer 19, as described previously, and into a storage unit 38 which stores the specimen numbers of samples for which physical cleaning is to be performed.

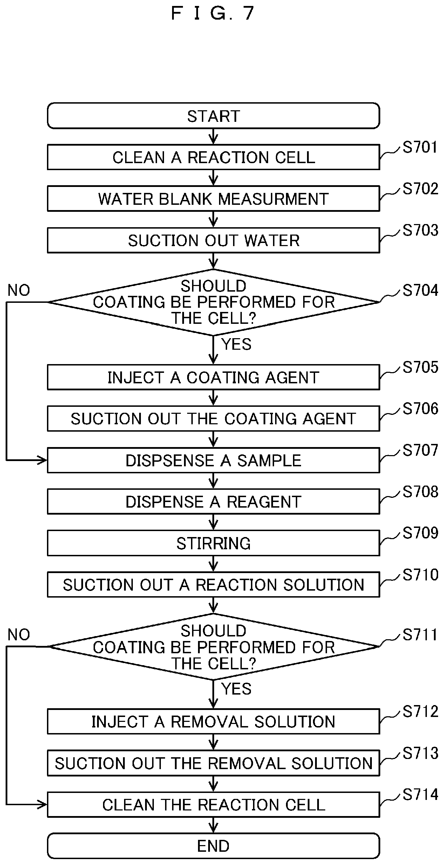

An operation flow of the automatic analysis device 100 configured as described hereinbefore is illustrated in Fig. 7. The operating panel 24 accepts input of analysis request information by the operator and the analysis request information is stored into the memory inside the computer 19; then, the operation of the automatic analysis device 100 starts.

At step S701, the reaction cell cleaning mechanism 11 receives a detergent and water supplied from the detergent supply unit 13 and the cleaning water pump 16 and cleans the inside of a reaction cell 4. The detergent and water inside the reaction cell 4 is suctioned out by the suction nozzle 12.

At step S702, blank water is injected into the reaction cell by a blank water injection mechanism which is not depicted. As the reaction disk 3 rotates, each time the reaction cell 4 passes between the spectral photometer 10 and the light source 26, a photometric measurement is taken by the spectral photometer 10. Absorbance that is measured at this time is used as a blank value.

At step S703, the blank water injected into the reaction cell 4 is suctioned out by a blank water suction nozzle which is not depicted.

At step S704, based on memory-stored information in the storage unit 38 and the analysis request information, the computer 19 determines whether or not pollution prevention film coating should be performed for the reaction cell 4 by the pollution prevention film forming mechanism 30.

If the analysis item requires that pollution prevention film coating is to be performed (if Yes at step S704), at step S705, the pollution prevention film forming mechanism 30 is controlled to supply a coating agent stored in the coating agent supply and withdrawal unit 33 into the reaction cell 4 from the nozzle head 311 of the coating agent injection nozzle 31. After a pollution prevention film has been formed with the supplied coating agent 33 inside the reaction cell 4, the coating agent supplied into the reaction cell 4 is suctioned out by the coating agent suction nozzle 32 at step S706. If the analysis item does not require that coating is to be performed (if No at step S704), step S705 and step S706 are skipped and operation at step S707 is performed.

At step S707, according to the analysis request information stored in the memory of the computer 19, a measurement object sample put in a sample cell 25 which was set in a predetermined position in the sample disk mechanism 1 is dispensed in a prescribed quantity into the reaction cell 4 set in the reaction disk 3 by the sample pipetter 15 and the sample nozzle 27 of the sample supplying dispensation mechanism 2.

At step S708, a prescribed quantity of a reagent drawn from a specified reagent container 6 among reagent containers 6 accommodated in the reagent disk mechanism 5 is dispensed by the reagent nozzle 28 of the reagent pipetting mechanism 7 into the reaction cell in which the sample was dispensed. At step S709, a mixed solution 610 of the sample and the reagent supplied into the reaction cell 4 is stirred by a stirrer 29 of the stirring mechanism 8 or an ultrasonic element which is not depicted.

At step S710, the sample and reagent mixed solution (reaction solution) 610 inside the reaction cell 4 is suctioned out by a reaction solution suction nozzle which is not depicted. After stirring of the sample and reagent mixed solution supplied to the reaction cell 4 at step S709 and until the start of suctioning out the reaction solution 610, the reaction disk 3 continues to make an index rotation at a predetermined angle for a predetermined tact time.

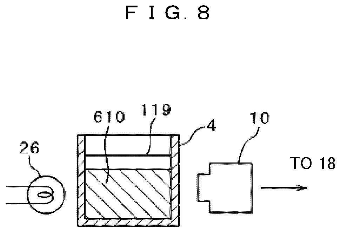

During the foregoing steps, a photometric measurement is taken by the spectral photometer 10, each time the reaction cell 4 on the reaction disk 3 passes between the spectral photometer 10 and the light source 26, as depicted in Fig. 8. Thereby, absorbance is measured at given intervals and, when the sample reacts with the reagent, information representing absorbance change during the reaction process as described below is obtained.

That is, from the measurement start (S701), until the sample has been dispensed into the reaction cell 4 (S707), absorbance is constant without changing. After that, dispensing the reagent into the reaction (S708) gives the sample and reagent mixed solution 610 and absorbance changes. Then, when stirring the mixed solution 610 starts (S709), absorbance further increases and, subsequently, becomes a constant value, and the measurement finishes. The reaction solution, i.e., the mixed solution 610 inside the reaction cell is suctioned out (S710) and the measurement finishes.

And now, an absorbance change caused by forming the solution pollution prevention film (S705, S706) is sufficiently small in comparison with an absorbance change caused by the sample and reagent mixed solution 610. Meanwhile, for some combination of a sample and a reagent, absorbance does not change from that in an initial state or changes but no significant change is observed. In this case, it is jugged that the sample does not react with the reagent or the sample does not include a substance that should be detected through reaction with the reagent.

At step S711, based on memory-stored information in the storage unit 38 and the analysis request information, the computer 19 determines whether or not the pollution prevention film removing mechanism 30 should be actuated to remove the pollution prevention film coated over the inner wall surfaces of the reaction cell 4.

If the pollution prevention film was coated over the inner wall surfaces of the reaction cell 4 and the analysis item requires the removal of the pollution prevention film (in the case of Yes at step S711), at step S712, the pollution prevention film removing mechanism 34 is controlled to inject a removal solution supplied from the removal solution supply and withdrawal unit 37 into the reaction cell 4 from the removal solution injection nozzle 35. At step S713, the removal solution inside the reaction cell 4 is suctioned out by the removal solution suction nozzle 36. If the analysis item does not require that coating is to be performed (in the case of No at step S711), step S712 and step S713 are skipped and operation at step S714 is performed.

Although an example where a pollution prevention film is formed immediately before an analysis was described above, forming a pollution prevention film may not necessarily be performed immediately before an analysis; for instance, when stopping the use of the device for a certain period, a pollution prevention film may be formed during transition of the device from an operating state to a stop state. Thereby, it is possible to dispense with time for forming a pollution prevention film when restarting the use of the device. Removing a pollution prevention film may not also necessarily be performed immediately after an analysis; for instance, with a pollution prevention film remaining formed in a reaction cell 4, the pollution prevention film may be removed, after using the reaction cell 4 for an analysis a plurality of times.

At step S714, as is the case for step S701, the reaction cell cleaning mechanism 11 receives a detergent and water supplied from the detergent supply unit 13 and the cleaning water pump 16 and cleans the inside of the reaction cell 4. After the cleaning finishes, the detergent and water inside the reaction cell 4 is suctioned out by the suction nozzle 12. The reaction cell 4 for which step S714 has finished is used for a next analysis in order.

An absorbance signal of the mixed solution 610 in the reaction cell 4 measured by the spectrophotometer 10 is taken into the computer 19 via the Log converter and A/D converter 18 and the interface 23. The captured absorbance related data is converted to a concentration value and the concentration value is stored into the storage device 22, namely, a floppy disk or a hard disk, or output to the printer 20. Alternatively, inspection data may be displayed on the CRT 21.

In the present Example, an example was illustrated in which, after a coating agent is injected into the reaction cell 4 at step S705, the coating agent is suctioned out at step S706; however, a short period of time may be allowed to pass between step 705 and step 706. That is, after injecting a coating agent into the reaction cell 4 at step S705, instead of suctioning out the coating agent soon by executing step S706, the use of the reaction cell 4 may be skipped (cell skipping) to allow a time to pass before starting the step S706, so that enough time is ensured to let the coating agent adsorb onto the inner wall surfaces of the reaction cell. In this case, during a period between step S705 and step S706, the reaction disk 3 may make an index rotation, so that other reaction cells 4 can be used for an analysis, whereas the use of only the reaction cell 4 is skipped.

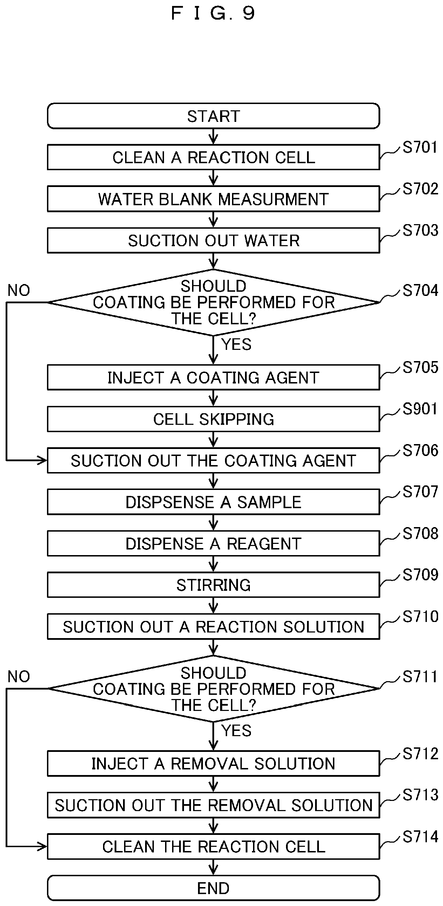

An operation flow of the automatic analysis device 100 in a case where cell skipping is applied is illustrated in Fig. 9. In Fig. 9, steps in which the same operation is performed as described for Fig. 7 are assigned the same step numbers as in Fig. 7. In this operation, cell skipping in step S901 is inserted between step S705 and step S706 and, at step S901, the reaction cell 4 into which the coating agent was injected is skipped so that the coating agent is held inside the reaction cell 4 for any given period of time. This enables it to ensure enough time to let the coating agent adsorb onto the inner wall surfaces 112, 114, 115 of the reaction cell 4 and to form a pollution prevention film surely in the reaction cell 4.

Moreover, cell skipping may be performed between step S712 and step S713. In this case, the removal solution is held inside the reaction cell 4 for any given period of time, which enables it to ensure enough time to remove the pollution prevention film and to remove the pollution prevention film surely.

Furthermore, cell skipping may be performed twice at step S901 and between step S712 and step S713. In this case, it is possible to ensure both enough time to let the coating agent adsorb onto the inner wall surfaces 112, 114, 115 of the reaction cell 4, thus forming a pollution prevention film, and enough time to remove the pollution prevention film from the reaction cell 4. In consequence, it is possible to form a pollution prevention film in the reaction cell 4 and remove this formed pollution prevention film from the reaction cell 4 surely.

### Example 2

In the present Example, an example of modification to the foregoing Example 1 is presented. In Example 2, presented is an example of configuring an automatic analysis device 200 in which the pollution prevention film forming mechanism and the pollution prevention film removing mechanisms are configured as independent mechanisms. In the present Example, it can be arranged so that another mechanism will additionally serve the function of the pollution prevention film forming mechanism or the pollution prevention film removing mechanism. Thereby, it becomes possible to reduce the space occupied by the automatic analysis device 200.

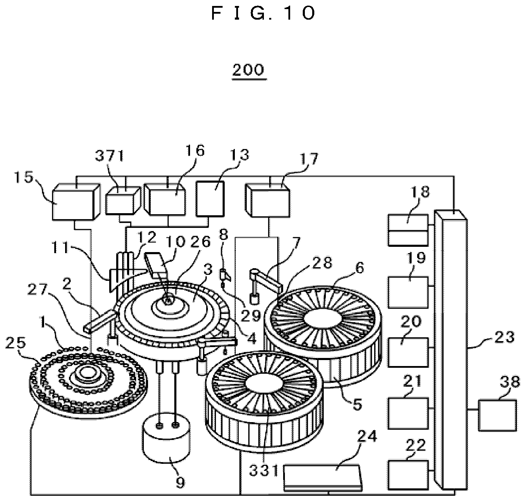

The configuration of the automatic analysis device 200 pertaining to Example 2 is depicted in Fig. 10. In the configuration depicted in Fig. 10, components that are common for those described with Fig. 6 in Example 1 are assigned the same numbers and their description is omitted.

In the present Example, instead of employing the coating agent supply and withdrawal unit 33 in Example 1, the reagent disk mechanism 5 is configured to supply a coating agent put in a reagent container 331 which is one of reagent containers 6 accommodated in the reagent disk mechanism 5. The coating agent put in the reagent container 331 can be supplied into a reaction cell 4 by the reagent supplying dispensation mechanism 7. In this case, a coating agent is beforehand mixed with a reagent for a specific analysis item and the coating agent can be dispensed together with the reagent for the specific analysis item into a reaction cell 4.

Moreover, in the present Example, instead of employing the removal solution supply and withdrawal unit 37 in Example 1, a removal solution supply and withdrawal unit 371 is configured to connect to the reaction container cleaning mechanism 11. By thus configuring it, a removal solution can be injected into a reaction cell 4 by the reaction container cleaning mechanism 11. In this case, a removal solution may be mixed with a detergent beforehand and the removal solution may be supplied together with the detergent into a reaction cell. Alternatively, a detergent may be used as a removal solution and the detergent supply unit 13 may supply a detergent as a removal solution into a reaction cell 4.

Although, in the present Example, an example was presented in which a coating agent put in a reagent container 331 is supplied into a reaction cell 4 by the reagent supplying dispensation mechanism 7, another mechanism may be used to supply a coating agent. For example, a coating agent may be supplied from the reaction container cleaning mechanism 11. When this is the case, a coating agent may solely supplied from the reaction container cleaning mechanism 11 into a reaction cell 4 or a detergent in which a coating agent was contained (mixed) beforehand may be supplied into a reaction cell 4. Moreover, blank water in which a coating agent was contained beforehand may be supplied into a reaction cell 4 from a blank water supply nozzle which is not depicted.

And now, the present invention is not limited to the described Examples and various modifications are included therein. For example, the foregoing Examples are those described in detail to explain the present invention clearly and the invention is not necessarily limited to those including all components described. A subset of the components of Example can be replaced by components of another Example. To the components of Example, components of another Example can be added. For a subset of the components of each Example, other components can be added to the subset or the subset can be removed or replaced by other components.

Moreover, a subset or all of the aforementioned components, functions, processing units, processing means, etc. may be implemented by hardware; for example, by designing an integrated circuit to implement them. Moreover, the aforementioned components, functions, etc. may be implemented by software in such a way that a processor interprets and executes a program that implements the respective functions. Information such as a program implementing the respective functions, tables, and files can be placed in a recording device such as a memory, hard disk, and SSD (Solid State Drive) or a recording medium such as an IC card, SD card, and DVD.

Moreover, control lines and information lines which are considered as necessary for explanation are depicted and all control lines and information lines involved in a product are not necessarily depicted. Actually, almost all components may be considered to be interconnected.

### Reference Signs List

1 ... Sample disk mechanism,
2 ... Sample supplying dispensation mechanism,
3 ... Reaction disk,
4 ... Reaction cell,
5 ... Reagent disk mechanism,
6 ... Reagent container,
7 ... Reagent supplying dispensation mechanism,
8 ... Stirring mechanism,
9 ... Thermostat bath,
10 ... Spectral photometer,
11 ... Reaction container cleaning mechanism (nozzle arm),
12 ... Suction nozzle,
13 ... Detergent,
14 ... Detergent injection nozzle,
15 ... Sample pipetter,
16 ... Cleaning water pump,
17 ... Regent pipetter,
18 ... Log converter and A/D converter,
19 ... Computer,
25 ... Sample cell,
26 ... Light source,
27 ... Sample probe,
28 ... Reagent probe,
29 ... Stirrer,
30 ... Pollution prevention film forming mechanism,
31 ... Coating agent supply nozzle,
32 ... Coating agent suction nozzle,
33 ... Coating agent,
34 ... Pollution prevention film removing mechanism,
35 ... Removal solution supply nozzle,
36 ... Removal solution suction nozzle,
37 ... Removal solution,
38 ... Storage unit,
111 ... Non-photometric side outer wall,
112 ... Non-photometric side inner wall,
113 ... Photometric side outer wall,
114 ... Photometric side inner wall,
115 ... Bottom face,
120 ... Hydrophilic treatment region,
130 ... Closed bottom,
140 ... Opening,
150 ... Composing material,
151 ... Polycycloolefin,
152 ... Hydrophilic treated layer,
160 ... Pollution prevention film,
161 ... Hydrophilic portion,
301 ... Glass substrate,
302 ... Gold film,
303 ... Polycycloolefin.

## Claims

1. An automatic analysis device comprising:
a reaction disk accommodating a plurality of reaction cells;
a reagent disk mechanism accommodating reagent containers, each holding a reagent;
a sample supplying dispensation mechanism equipped with a sample nozzle that suctions a sample held in a sample cell holding a sample as an inspection target and supplies a prescribed quantity of the sample to a reaction cell in the reaction disk;
a reagent supplying dispensation mechanism equipped with a reagent dispensing nozzle that suctions a reagent held in a reagent container in the reagent disk mechanism and supplies a prescribed quantity of the reagent to a reaction cell in the reaction disk;
a detector that irradiates, with light, the reaction cell in which a mixed solution of a sample supplied by the sample supplying dispensation mechanism and a reagent supplied by the reagent supplying dispensation mechanism has been created, detects light transmitted through the reaction cell, and detects an optical characteristic of the mixed solution;
a pollution prevention film forming mechanism that supplies the reaction cell in the reaction disk with a pollution prevention solution for preventing inner wall surfaces of the reaction cell supplied with the sample and the reagent from being polluted with the sample or the reagent or a mixed solution of the sample and the reagent, forms a pollution prevention film on the inner wall surfaces of the reaction cell, and, subsequently, discharges the pollution preventing solution from the reaction cell;
a pollution prevention film removing mechanism that supplies the reaction cell in which the pollution prevention film has been formed in the reaction disk with a removal solution for removing the pollution prevention film from the inner wall surfaces of the reaction cell and discharges, from the reaction cell, the removal solution by which the pollution prevention film has been removed from the inner wall surfaces of the reaction cell;
a computer that exerts overall control; and
an operating panel to input information relevant to analysis to the computer.

2. The automatic analysis device according to claim 1, wherein the computer controls the pollution prevention film forming mechanism to supply the pollution prevention solution to a reaction cell selected from among a plurality reaction cells accommodated in the reaction disk and form a pollution prevention film on the inner wall surfaces of the reaction cell, as appropriate according to the type of a sample that is supplied to a reaction cell by the sample supplying dispensation mechanism and of a reagent that is supplied to a reaction cell by the reagent supplying dispensation mechanism.

3. The automatic analysis device according to claim 2, wherein the computer controls the pollution prevention film forming mechanism to supply the pollution prevention solution to a reaction cell selected from among a plurality reaction cells accommodated in the reaction disk and form a pollution prevention film on the inner wall surfaces of the reaction cell, based on information input from the operating panel.

4. The automatic analysis device according to claim 1, wherein the computer controls the pollution prevention film removing mechanism to supply the removal solution to a reaction cell selected from among a plurality reaction cells accommodated in the reaction disk and remove a pollution prevention film formed on the inner wall surfaces of the reaction cell, as appropriate according to the type of a sample that is supplied to the reaction cell by the sample supplying dispensation mechanism and of a reagent that is supplied to the reaction cell by the reagent supplying dispensation mechanism.

5. The automatic analysis device according to claim 4, wherein the computer controls the pollution prevention film removing mechanism to supply the removal solution to a reaction cell selected from among a plurality reaction cells accommodated in the reaction disk and remove a pollution prevention film formed on the inner wall surfaces of the reaction cell, based on information input from the operating panel.

6. The automatic analysis device according to claim 1, wherein the pollution prevention film forming mechanism supplies the reaction cell with a water-soluble resin, namely, an aqueous solution of polyethylene glycol (PEG) or an aqueous solution of polyvinyl pyrrolidone (PVP) as a pollution prevention solution.

7. The automatic analysis device according to claim 1, wherein the pollution prevention film removing mechanism supplies the reaction cell with an aquatic detergent as a removal solution.

8. An analysis method using an automatic analysis device, comprising:
suctioning a sample held in a sample cell by a sample nozzle of a sample supplying dispensation mechanism;
supplying a sample suctioned by the sample nozzle to a reaction cell accommodated in a reaction disk;
suctioning a reagent held in a reagent container in a reagent disk mechanism by a reagent dispensing nozzle of a reagent supplying dispensation mechanism;
supplying a reagent suctioned by the reagent dispensing nozzle to a reaction cell in the reaction disk; and
irradiating, with light, the reaction cell in which a mixed solution of the sample supplied and the reagent supplied has been created and analyzing the sample based on a signal obtained by detecting light transmitted through the reaction cell;
the analysis method further comprising:
before supplying a sample suctioned by the sample nozzle to a reaction cell accommodated in the reaction disk, supplying the reaction cell with pollution prevention solution and forming a pollution prevention film on inner wall surfaces of the reaction cell;
discharging the mixed solution from the reaction cell after having analyzed the sample; and
supplying a removal solution to the reaction cell from which the mixed solution has been discharged and removing the pollution prevention film formed on the inner wall surfaces of the reaction cell.

9. The analysis method using an automatic analysis device according to claim 8, wherein, before supplying a sample suctioned by the sample nozzle to a reaction cell accommodated in the reaction disk, a step of supplying the reaction cell with pollution prevention solution and forming pollution prevention film on inner wall surfaces of the reaction cell comprises supplying the pollution prevention solution to a reaction cell selected from among a plurality reaction cells accommodated in the reaction disk and forming a pollution prevention film on the inner wall surfaces of the reaction cell, as appropriate according to the type of a sample that is supplied to a reaction cell by the sample supplying dispensation mechanism and of a reagent that is supplied to a reaction cell by the reagent supplying dispensation mechanism.

10. The analysis method using an automatic analysis device according to claim 8, wherein, a step of supplying the removal solution to a reaction cell selected from among a plurality reaction cells accommodated in the reaction disk and removing a pollution prevention film formed on the inner wall surfaces of the reaction cell comprises supplying the removal solution to a reaction cell selected from among a plurality reaction cells accommodated in the reaction disk and removing a pollution prevention film formed on the inner wall surfaces of the reaction cell, as appropriate according to the type of a sample that is supplied to a reaction cell by the sample supplying dispensation mechanism and of a reagent that is supplied to a reaction cell by the reagent supplying dispensation mechanism.

11. The analysis method using an automatic analysis device according to claim 8, wherein the reaction cell is supplied with a water-soluble resin, namely, an aqueous solution of polyethylene glycol (PEG) or an aqueous solution of polyvinyl pyrrolidone (PVP) as the pollution prevention solution.

12. The analysis method using an automatic analysis device according to claim 8, wherein the reaction cell is supplied with an aquatic detergent as the removal solution.

13. A reaction cell into which a sample and a reagent are injected to create a mixed solution for use in an automatic analysis device, the reaction cell comprising a pair of opposing wall surfaces transmitting light as lateral wall surfaces, wherein a hydrophilic surface is formed, at least in a region contacting with the mixed solution, to make the inner surfaces of the pair of walls transmitting light.

14. The reaction cell for use in an automatic analysis device according to claim 13, wherein the hydrophilic surface is coated with a water-soluble resin, the water-soluble resin is adsorbed onto the hydrophilic surface through hydrogen bonding.
